Europäisches Patentamt

European Patent Office

Office européen des brevets

(19)

(11) Veröffentlichungsnummer: **0 062 734**
**B1**

(12) **EUROPÄISCHE PATENTSCHRIFT**

(45) Veröffentlichungstag der Patentschrift: 28.05.86

(21) Anmeldenummer: 82100654.1

(22) Anmeldetag: 30.01.82

(51) Int. Cl.⁴: **A 01 B 63/24**

(54) **Pflug mit einer Schnitt- und Zugpunkteinstellung.**

(30) Priorität: 15.04.81 DE 3115248
24.12.81 DE 3151302

(43) Veröffentlichungstag der Anmeldung:
20.10.82 Patentblatt 82/42

(45) Bekanntmachung des Hinweises auf die
Patenterteilung:
28.05.86 Patentblatt 86/22

(84) Benannte Vertragsstaaten:
AT CH DE FR GB IT LI NL

(56) Entgegenhaltungen:
DE-A-2 145 719
DE-U-7 830 864
FR-A-1 382 199
FR-A-1 464 273

(73) Patentinhaber: Rabewerk Heinrich Clausing
D-4515 Bad Essen 8 - Linne (DE)

(72) Erfinder: Albers, Heinrich
Rabber 32
D-4515 Bad Essen 1 (DE)

(74) Vertreter: Missling, Arne, Dipl.-Ing. et al
Patentanwälte Dipl.-Ing. R. Schlee Dipl.-Ing. A.
Missling Bismarckstrasse 43
D-6300 Giessen (DE)

Courier Press, Leamington Spa, England.

EP 0 062 734 B1

**Beschreibung**

Die Erfindung betrifft einen Pflug mit einem Pflugvordergestell und einem gelenkig mit diesem verbundenen, die Pflugkörper tragenden Pflugrahmen, wobei der erste Pflugkörper zum Schwenkpunkt des Pflugrahmens mit Abstand angeordnet ist, die Pflugkörper am Pflugrahmen befestigt und jeweils mit einer Konsole versehen sind, wobei die Konsolen über eine eine Parallelführung bewirkende Stange untereinander verbunden sind und Parallelführung, Konsolen, Pflugvordergestell und Pflugrahmen ein Getriebe derart bilden, daß beim Verschwenken des Pflugrahmens gleichzeitig eine Verdrehung sämtlicher Pflugkörper gegenüber dem Pflugrahmen eintritt.

Pflüge, die mit Einrichtungen zur Verstellung der Schnittbreite der vorstehend genannten Art versehen sind, gestatten es zum einen, den Zugkraftbedarf des Pfluges an die vorhandene Schlepperleistung anzupassen und zum anderen die Anpassung z.B. so zu wählen, daß der Schlepper immer im optimalen Leistungsbereich gefahren werden kann bzw. daß der Schlupf der Schlepperräder eine vertretbare Höhe nicht übersteigt. Dies ist Voraussetzung für eine optimale Ausnutzung des Treibstoffes.

Diese Einstellbarkeit der Schnittbreite der Pflugkörper zur Beeinflussung der Zugkraft wird immer dann vorteilhaft angewendet werden können, wenn man z.B. für bestimmte Feldfrüchte oder auch zu verschiedenen Jahreszeiten unterschiedlich tief pflügen will. Wenn man z.B. im Frühjahr weniger tief zu pflügen wünscht, so kann man dann bei optimaler Leistungsanpassung mit größerer Arbeitsbreite arbeiten. Andererseits kann es auch erforderlich sein, die Arbeitsbreite in Abhängigkeit des Bodenzustandes abzuändern. Bei trockenen Böden wird man eine schmalere Arbeitsbreite wählen, was zusätzlich eine bessere Zerkrümelung des Erdbodens zur Folge hat. Bei feuchterem Boden, der ohnehin besser krümelt und der einen geringeren spezifischen Widerstand aufweist, kann die Schnittbreite breiter gewählt werden. Des weiteren ist auch eine Schnittbreitenveränderung bei Bergauf- und Bergabfahrt vorteilhaft. Überdies kommt es vor, daß mit ein und demselben Pflug unterschiedliche Bodenqualitäten bearbeitet werden müssen. Des weiteren kann es auch bei ungünstigen Witterungsbedingungen vorteilhaft sein, die Schnittbreite zu verändern, um den Schlupf der Hinterräder in einer vertretbaren Höhe zu halten. Ein zu hoher Schlupf führt zu einer schlechten Ausnutzung des Schleppers, auch wenn dieser dabei in seinem günstigen Leistungsbereich arbeiten sollte. Schnittbreitenänderungen sämtlicher Pflugkörper eines Pfluges sind also in hohem Umfange wünschenswert, wobei vorzugsweise die Änderung der Schnittbreite der Pflugkörper vom Fahrersitz des Schleppers in kürzester Zeit zu bewerkstelligen sein sollte.

Eine Schnittbreitenverstelleinrichtung der eingangs genannten Art ist z.B. aus der DE—A— 2 145 719 bekannt. Sämtliche Pflugkörper dieses bekannten Pfluges sind um vertikale Achsen schwenkbar und darüber hinaus untereinander über ein Lenkerparallelogramm derart verbunden, daß bei einer Verschwenkung des Pflugrahmens relativ zur Pflugkoppel diese immer ihre Stellung relativ zur Pflugkoppel beibehalten. Erreicht wird dies dadurch, daß der durchgehende Lenker des Lenkerparallelogramms, der parallel zum Pflugrahmen verläuft, mit seinem vorderen Ende gelenkig mit der Pflugkoppel verbunden ist. Der Nachteil dieser bekannten Anordnung besteht jedoch darin, daß bei einer derartigen Verschwenkung des Pflugrahmens der erste Pflugkörper nicht ausreichend weit seitlich verschwenkt wird, d.h. weniger als die übrigen Pflugkörper, wie dies aus DE—A—2 145 719 zu ersehen ist. Selbst wenn der Nachteil des ungenügenden Verschwenkens des ersten Pflugkörpers durch Vergrößerung des Abstandes desselben von der Schwenkachse für den Pflugrahmen vermindert wird, d.h. also, daß auch die Schnittbreite des ersten Pflugkörpers richtig angepaßt wäre, so verbleibt hier noch der Nachteil, daß dann der Kraftangriffspunkt für den gesamten Pflug seitlich verlagert wäre, wobei jedoch der Zugpunkt unverändert in seiner alten Lage bliebe. Die Folge ist, daß die Zugrichtung relativ zur Schlepperhinterachse einen anderen Verlauf erhält. Unterstellt man, daß vor der Korrektur die Zugrichtung optimal gewesen ist, so daß ein Gegensteuern mittels der Schleppervorderräder nicht erforderlich war, so hätte man durch die Verstellung der Schnittbreite diese optimale Einstellung ins Negative hin verändert. Bei einer Verringerung der Schnittbreite wäre die Zuglinie zum gepflügten Feld hin verschoben, während bei einer Verbreiterung der Schnittbreite das Umgekehrte der Fall wäre. In jedem Fall müßte man jetzt dafür Sorge tragen, daß auch der Zugpunkt entsprechend verschoben wird. Die Verstellung des Zugpunktes erfordert jedoch bei den bekannten Pflügen einen erheblichen Zeitaufwand, so daß entweder die Schnittbreitenverstellung unterbleibt oder aber das schwierigere Fahren des Schleppers in Kauf genommen wird.

Der Erfindung liegt die Aufgabe zugrunde, einen Pflug der eingangs genannten Art so auszubilden, daß bei einer Verstellung der Schnittbreite sämtlicher Pflugkörper zum einen auch die Schnittbreite des ersten Pflugkörpes sowie gegebenenfalls der Vorwerkzeuge in dem geforderten Maß verändert wird und zum anderen, daß bei der Schnittbreitenverstellung gleichzeitig eine Zugpunktkorrektur erfolgt.

Diese Aufgabe wird erfindungsgemäß durch die im kennzeichnenden Teil des Anspruches 1 enthaltenen Merkmale gelöst.

Durch die Vergrößerung des Abstandes des ersten Pflugkörpers von der Schwenkachse des Pflugrahmens im Pflugvordergestell, die reeller oder ideeller Art sein kann, ist sichergestellt, daß der erste Pflugkörper beim Verschwenken des Pflugrahmens ausreichend seitlich verschwenkt wird, so daß keine weitere Schnittbreitenkorrektur für den ersten Pflugkörper notwendig ist. Durch die weitere Maßnahme, daß die Parallelogrammführung für sämtliche Pflugkörper, die diese untereinander immer die gleiche Ausrichtung einnehmen läßt, über einen weiteren Lenker mit der Pflugkoppel derart verbunden ist, daß gleichzeitig mit der Verschwenkung des Pflugrahmens auch die Neigung der Pflugkörper relativ zum Pflugvordergestell verändert wird, und zwar in dem Sinn, daß der Zugpunkt entsprechend nach links oder nach rechts verschoben wird, ist sichergestellt, daß die Zugrichtung relativ zur Schlepperhinterachse den jeweils optimalen Verlauf erhält, so daß kein Gegensteuern der Schleppervorderräder auch bei Verstellung der Schnittbreite notwendig ist.

Zur Anpassung des erfindungsgemäßen Pfluges an die jeweiligen Schlepper ist der die Konsole des ersten Pflugkörpers mit dem Pflugvordergestell verbindende Lenker in seiner Länge einstellbar ausgebildet, vorzugsweise in Form eines Spannschlosses. Des weiteren sind mehrere Anlenkpunkte für den Lenker sowohl an der Pflugkoppel als auch an der Konsole des ersten Grindels vorgesehen, so daß die erstmalige Anpassung an jeden beliebigen Schlepper durchgeführt werden kann. Diese Einstellung kann dann für sämtliche Schnittbreiten beibehalten werden, wobei die Schnittbreiteneinstellung vorzugsweise durch Betätigung eines Hydraulikzylinders oder durch ein Spannschloß erfolgt, der den Pflugrahmen relativ zum Pflugvordergestell verschwenkt.

Die übrigen Vorwerkzeuge wie Seche bzw. Stützräder, sofern diese benötigt werden, werden gleichfalls entweder an den Konsolen der Pflugkörper oder aber an getrennten gelenkig am Pflugrahmen angeordneten Konsolen angebracht, die gleichfalls von der die Konsolen der Pflugkörper verbindenden Stange verschwenkt werden. Hierdurch ist gewährleistet, daß die Ausrichtung dieser Vorwerkzeuge und des Pendelstützrades auch bei einem verschwenkten Rahmen, d.h. bei veränderter Schnittbreite der Pflugkörper, immer gewährleistet bleibt.

Ein Ausführungsbeispiel der Erfindung ist im folgenden anhand der Zeichnung näher beschrieben, in dieser zeigen:

Fig. 1 eine Draufsicht auf einen erfindungsgemäß ausgebildeten Drehpflug,

Fig. 2 das vordere Ende des in Fig. 1 dargestellten Drehpfluges mit zwei unterschiedlichen Schnittbreitenstellungen,

Fig. 3 eine Draufsicht auf ein weiteres Ausführungsbeispiel eines erfindungsgemäß ausgebildeten Pfluges mit einem an einer besonderen Konsole angeordneten Vorwerkzeug und

Fig. 4 eine weitere Möglichkeit der Anordnung einer ein Vorwerkzeug tragenden Konsole.

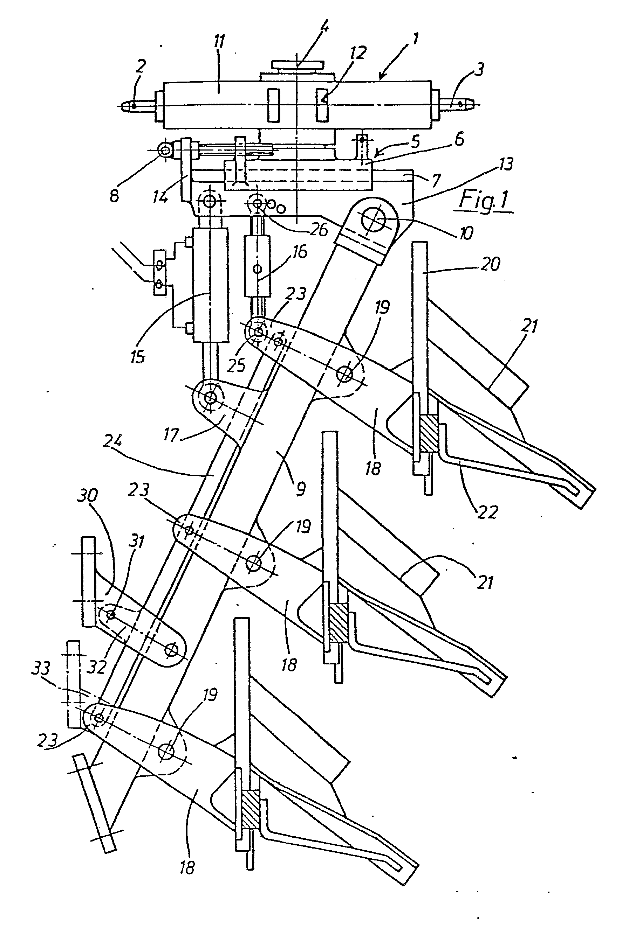

Fig. 1 zeigt einen erfindungsgemäß ausgebildeten Drehpflug in Draufsicht, wobei der Übersichtlichkeit halber die Drehvorrichtung weggelassen worden ist. Des weiteren fehlen die verstellbaren Endanschläge für die Drehung, mit deren Hilfe die Verkantung der Pflugkörper erreicht wird und des weiteren sind die oberen Pflugkörper nicht dargestellt. Der Pflug weist ein Pflugvordergestell 1 auf, an dem ein Pflugrahmen 9 über ein in der Arbeitsstellung lotrecht liegendes Gelenk 10 angeschlossen ist. Das Pflugvordergestell 1 besteht aus einer Koppel 11, die Zapfen 2, 3 für den Anschluß der Unterlenker aufweist. Der gleichfalls nicht dargestellte Oberlenker wird am Turm 12 der Koppel 11 angeschlossen. Die Koppel 11 nimmt des weiteren die Drehachse 4 auf, an der eine Breitenverstelleinrichtung 5 herkömmlicher Art befestigt ist. Diese Breitenverstelleinrichtung besteht aus einer Kulisse 6, in der eine hochkant stehende Platte 7 verschiebbar ist. An der Platte 7 ist ein Schiebestück 13 starr befestigt, an dessen linkem Ende an einem Arm 14 eine Spindel 8 für die Verschiebung der Platte 7 vorgesehen ist.

An dem Schiebestück 13 ist zum einen die lotrechte Achse 10 angeordnet, um die der Pflugrahmen 9 schwenkbar ist. Des weiteren sind an dem Schiebestück 13 ein doppelwirken der Hydraulikzylinder 15 und ein Spannschloß 16 angelenkt. Der Hydraulikzylinder 15 greift mit seinem anderen Ende an einem mit dem Pflugrahmen 9 starr verbundenen Arm 17 an. Das andere Ende des Spannschlosses 16 ist an einer Konsole 18 angelenkt, die ihrerseits gelenkig in 19 am Pflugrahmen 9 befestigt ist. An der Konsole 18 ist ein nach vorn ragender Arm 20 befestigt, der zur Montage der Vorwerkzeuge dient. Des weiteren ist an der Konsole 18 der die Pflugkörper 21 tragende Grindel 22 befestigt, der geschnitten dargestellt ist. Der Grindel 22 trägt an seinem anderen, nicht dargestellten Ende einen weiteren Pflugkörper 21. Jeder Pflugkörper 21 ist an einer gleichen Konsole 18 befestigt, die sämtlich um lotrecht liegende Gelenke 19 schwenkbar sind. Die Enden 23 der Konsolen sind untereinander über eine Stange 24 gelenkig verbunden, die parallel zum Pflugrahmen 9 und zu den Anlenkpunkten 19 der Konsolen verläuft und somit zusammen mit dem Pflugrahmen ein Parallelogramm bilden, so daß bei Verschwenkung der Konsolen 18 um die jeweiligen Anlenkpunkte 19 die Pflugkörper 21 ihre relative Lage zueinander beibehalten.

Die vorderste Konsole 18 ist über ein Spannschloß 16 mit dem Pflugvordergestell 1 verbunden, und zwar ist das Spannschloß in den Punkten 25 und 26 an der Konsole bzw. am Schiebestück 13 angelenkt. Spannschloß 16, Konsole 18, Schiebestück 13 und der Pflugrahmen 9 bilden so ein unregelmäßiges Viereck, so daß bei einer Verschwenkung des Pflugrahmens 9 um das vordere Gelenk 10 mit Hilfe des Hydraulikzylinders 15 gleichzeitig eine Verschwenkung der Pflugkörper relativ zum Pflugvordergestell eintritt. Dies würde dann nicht der Fall sein, wenn die Stange 24 mit den Gelenken 10 und 19 ein Parallelogramm bildend über die vorderste Konsole 18 hinausgeführt wäre und ihrerseits am Schiebestück 13 angelenkt wäre.

Soll die Schnittbreite der einzelnen Pflugkörper 21 verringert werden, dann soll das Pflugvordergestell auch etwas seitlich zum gepflügten Land hin verschwenkt bzw. verschoben werden. Dies bedeutet, daß die Pflugkörper 21, bezogen auf das Pflugvordergestell 1, von oben gesehen geringfügig rechts herum schwenken müssen. Der Lenker zwischen den Gelenkpunkten 19 und 25 muß somit, um dies zu ermöglichen, etwas kürzer sein als der Lenker zwischen den Gelenken 10 und 26. Dies bedeutet andererseits, daß sich die Verlängerungen der Verbindungslinien der Gelenkstellen 10 und 19 sowie der Gelenkstellen 26 und 25 in Fahrtrichtung gesehen weit hinten schneiden müssen. Der Relativpol muß somit hinter dem Pflug liegen. Um die relative Verschwenkung der Pflugkörper relativ zur Koppel einstellen zu können, sind mehrere vordere Anlenkpunkte 26 bei dem Ausführungsbeispiel vorgesehen. Zur Erreichung des gleichen Zieles können jedoch auch an der Konsole mehrere Anlenkpunkte vorhanden sein oder aber sowohl die Konsole als auch das Schiebestück sind mit mehreren Anlenkpunkten für das Spannschloß 16 versehen. Durch veränderte Anlenkpunkte des Spannschlosses 16 und durch Veränderung dessen Länge kann die Neigung der Pflugkörper 21 an den jeweiligen Schlepper angepaßt werden.

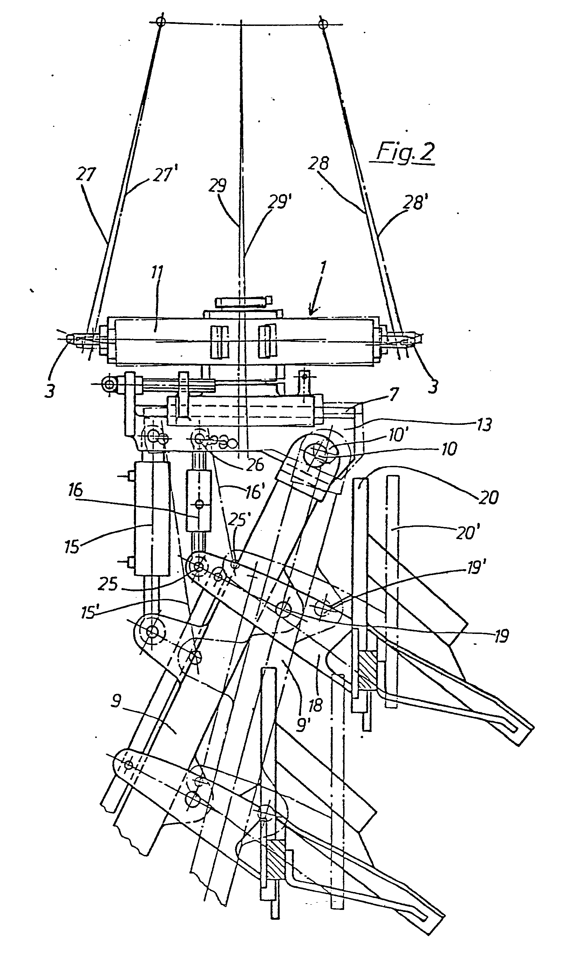

Die vordere Schnittbreitenverstelleinrichtung 5 dient lediglich zur Anpassung des Pfluges an den jeweiligen Schleppertyp. Diese Schnittbreiteneinstellung sowie das Spannschloß 16 braucht nur für die Anpassung an den entsprechenden Schlepper eingestellt zu werden oder beim Übergang von der Ebene zum Hang oder umgekehrt. Die anschließende Schnittbreitenverstellung erfolgt über den Hydraulikzylinder 15, der den Pflugrahmen 9 relativ zum Pflugvordergestell 1 verschwenkt, wobei gleichzeitig eine Verschwenkung der Pflugkörper 21 eintritt, wie dies in Fig. 2 dargestellt ist. In dieser Figur sind die unteren Lenker 27 und 28 des Schleppers mit eingezeichnet worden. Des weiteren ist die Lage des oberen Lenkers 29 angedeutet. Die ausgezogene Stellung der Unterlenker entspricht der ausgezogenen Stellung des Pflugrahmens 9, während die gestrichelte Stellung der Unterlenker der gestrichelten Stellung des Pflugrahmens 9 entspricht. Die Anlenkpunkte 25, 26 des Spannschlosses 16 wurden in diesem Ausführungsbeispiel extrem gewählt, um das Prinzip der Erfindung besser verdeutlichen zu können. Die Bezugszeichen der gestrichelten Stellung sind mit 7', 25' usw. bezeichnet. Wie die Zeichnung zeigt, ist das Pflugvordergestell gegenüber der mit ausgezeichneten Strichen dargestellten Ausgangsstellung nach rechts hin seitlich verschwenkt, wodurch auch die Unterlenker seitlich verschwenkt sind und wodurch der Zugpunkt, nämlich der Schnittpunkt der Richtung der Unterlenker, zur ungepflügten Seite hin wandert, d.h. genau in der gewünschten Richtung, damit die resultierende Zugrichtung wieder in ihrer optimalen Stellung verläuft.

Erfindungsgemäße Pfluge können mit Vorwerkzeugen oder aber mit Stützrädern versehen sein. Damit die Vorwerkzeuge, z.B. Rundseche und auch die Stützräder bei allen Schnittbreiten immer in der richtigen Richtung laufen, können diese an Konsolen 30 angeordnet werden, die ihrerseits gelenkig am Pflugrahmen 9 angebracht sind. Die Konsolen 30 sind des weiteren gelenkig in 31 an einem Arm 32 angelenkt, der starr mit der Stange 24 verbunden ist. Hierdurch ist gewährleistet, daß die Konsole 30 genau im gleichen Sinn verschwenkt wird wie die Pflugkörper 21.

Es ist jedoch auch denkbar, die Konsole 33 für das Stützrad direkt an einer Konsole 18 für die Pflugkörper 21 zu befestigen, wobei die gleiche gewünschte Verschwenkung bei einer Verschiebung des Pflugrahmens 9 eintritt.

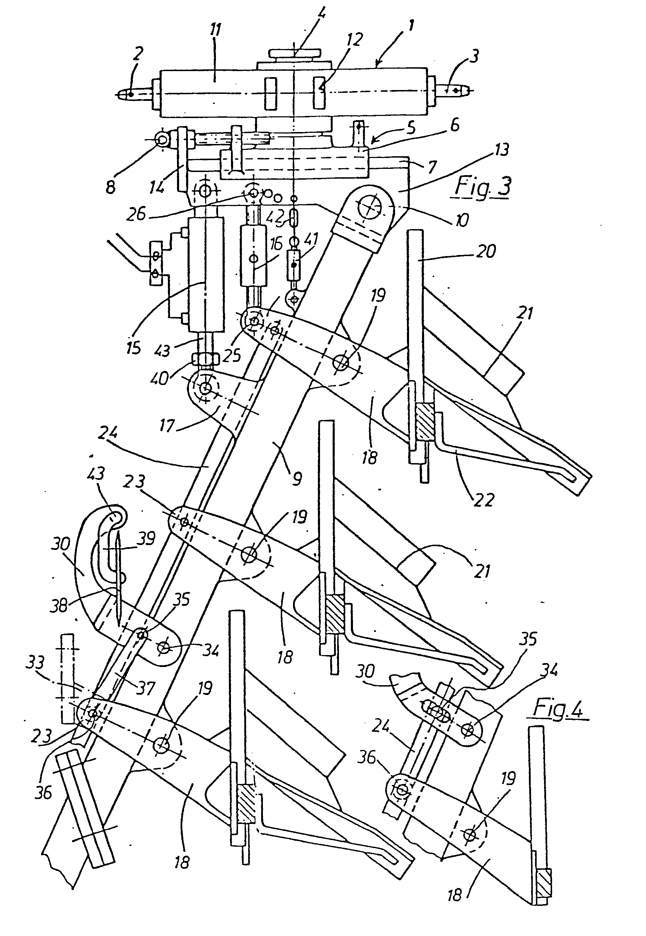

Bei dem in Fig. 3 gezeigten Ausführungsbeispiel sind gleiche Teile mit gleichen Bezugszeichen versehen. Dieses Ausführungsbeispiel unterscheidet sich von dem nach den Fig. 1 und 2 dadurch, daß der Pflug mit zwei Anschlägen versehen ist, zwischen denen der Pflugrahmen 9 um das lotrecht liegende Gelenk 10 verschwenkbar ist. Des weiteren zeigt der Pflug nach Fig. 3 ein Arbeitswerkzeug, das an einer besonderen Konsole 30 befestigt ist.

Die beiden zur Einstellung von Arbeitsstellungen des Pflugrahmens 9 dienenden Anschläge bestehen zum einen aus einem Spannschloß 41, das mit einer Kette 42 parallelgeschaltet ist. Das Spannschloß ist am Pflugrahmen 9 und die Kette am Schiebestück 13 der Breitenverstelleinrichtung 5 befestigt. Dieser aus Spannschloß 41 und Kette 42 gebildete Anschlag begrenzt die maximale Verschwenkbarkeit des Pflugrahmens furchenseitig. Der landseitige Anschlag wird durch eine Mutter 40 gebildet, die auf der Kolbenstange 43 aufgeschraubt und verstellbar ist. Diese beiden Einstellmöglichkeiten dienen dazu, die Schnittbreite einfach und schnell zwischen zwei Größen zu verändern, wobei die kleinere Schnittbreite beim Bergauffahren und die größere Schnittbreite beim Bergabfahren gewählt wird. Das Wiederauffinden vorgegebener Schnittbreiten kann z.B. durch entsprechende Markierungen erleichtert werden. Es ist jedoch auch denkbar, anstelle des Spannschlosses 41 und der Kette 42 beide Anschläge auf dem Hydraulikzylinder anzuordnen.

Vor dem letzten Pflugkörper 21 ist an einer Konsole 30 ein Rundsech 38 angeordnet, das von einem Arm 39 getragen wird, der and der Konsole 30 gelenkig angeordnet ist. Die Konsole 30 ist wiederum schwenkbar am Pflugrahmen 9 angeordnet. Gleichzeitig greift an der Konsole 30 ein Lenker 37 an, dessen anderes Ende an der Konsole 18 des dahinter liegenden Pflugkörpers 21 angelenkt ist. Der Abstand des Angriffpunktes 36 des Lenkers 37 vom Schwenkpunkt 19 der Konsole 18 ist größer als der des Anlenkpunktes 35 zum Schwenkpunkt 34 der Konsole 30. Hierdurch wird erreicht, daß der Verschwenkwinkel der Konsole 30 grösser ist als der der Konsole 18, was auch erforderlich ist, damit das Rundsech 38 die richtige Lage zu dem nicht dargestellten Pflugkörper 21 einnimmt.

Wie Fig. 4 zeigt, ist es auch denkbar, die Verschwenkung der die Vorwerkzeuge tragenden Konsole 30 direkt über die Stange 24 vorzunehmen. Hierbei greift der mit der Stange 24 verbundene Bolzen 35 in ein in der Konsole 30 ausgebildetes Langloch ein. Auch hier ist der Hebelarm für die Konsole 30 kleiner als für die Konsole 18 des letzten nicht dargestellten Pflugkörpers. Weitere Vorwerkzeuge können an gleich ausgebildeten Konsolen 30 oder aber auch an dem Arm 20 befestigt werden, der mit den Konsolen 18 verbunden ist. Die Konsolen 18 sind so ausgebildet, daß deren Schwenkpunkt 19 in etwa neben den Pflugkörpern zu liegen kommt.

Der Hydraulikzylinder 15 kann auch die Aufgabe mit übernehmen, den Pflugrahmen 9 vor jedem Wenden der Pflugkörper so zu verschwenken, daß der Schwenkpunkt des Pfluges in oder annähernd in die reelle oder ideelle Drehachse gelangt. Hierdurch wird die für das Wenden der Pflugkörper erforderliche Drehenergie verringert und ein Schlagen des Pflugrahmens auf seine Endanschläge vermieden oder zumindest gemildert.

**Patentansprüche**

1. Pflug mit einem Pflugvordergestell (1) und einem gelenkig mit diesem verbundenen, die Pflugkörper tragenden Pflugrahmen (9), wobei der erste Pflugkörper zum Schwenkpunkt (10) des Pflugrahmens (9) mit Abstand angeordnet ist, die Pflugkörper am Pflugrahmen (9) befestigt und jeweils mit einer Konsole (18) versehen sind, wobei die Konsolen (18) über eine eine Parallelführung bewirkende Stange (24) untereinander verbunden sind und Parallelführung, Konsolen, Pflugvordergestell und Pflugrahmen ein Getriebe derart bilden, daß beim Verschwenken des Pflugrahmens (9) gleichzeitig eine Verdrehung sämtlicher Pflugkörper (21) gegenüber dem Pflugrahmen eintritt, dadurch gekennzeichnet, daß die Konsole (18) des ersten Pflugkörpers (21) oder die die Parallelführung der Pflugkörper (21) bewirkende Stange (24) über einen Lenker (16) mit dem Pflugvordergestell (1) verbunden ist, daß der Lenker (16) einen Bestandteil des Getriebes bildet und mit der Konsole (18) des ersten Pflugkörpers (21), dem Pflugrahmen (9) und dem Pflugvordergestell ein unregelmäßiges Gelenkviereck bildet, so daß beim Verschwenken des Pflugrahmens (9) gleichzeitig eine Verdrehung sämtlicher Pflugkörper (21) gegenüber dem Pflugvordergestell (1) eintritt.

2. Pflug nach Anspruch 1, dadurch gekennzeichnet, daß der Rahmenschwenkpunkt (10) vor dem Schwenkpunkt (19) des ersten Pflugkörpers (21) liegt.

3. Pflug nach Anspruch 1 oder 2, dadurch gekennzeichnet, daß der Abstand zwischen dem Rahmenschwenkpunkt (10) und dem Schwenkpunkt (19) des ersten Pflugkörpers (21) geringer ist als der Abstand zweier Schwenkpunkte (19) aufeinanderfolgender Pflugkörper.

4. Pflug nach einem der Ansprüche 1 bis 3, dadurch gekennzeichnet, daß der Abstand zwischen dem Rahmenschwenkpunkt (10) und dem Schwenkpunkt (19) des ersten Pflugkörpers etwa halb so groß ist wie der Abstand der Pflugkörper (21) untereinander.

5. Pflug nach einem der Ansprüche 1 bis 4, dadurch gekennzeichnet, daß der Lenker (16) in seiner Länge verstellbar ist.

6. Pflug nach einem der Ansprüche 1 bis 5, dadurch gekennzeichnet, daß für den Lenker (16) an der Konsole (18) und am Pflugvordergestell (1, 13) mehrere Anlenkpunkte (25, 26) vorgesehen sind.

7. Pflug nach einem der Ansprüche 1 bis 6, dadurch gekennzeichnet, daß die Verbindungslinien der Gelenkpunkte (10, 19 und 25, 26) sich hinter den Anlenkpunkten (19, 25) des ersten Pflugkörpers (21) sowie des Lenkers (16) schneiden.

8. Pflug nach einem der Ansprüche 1 bis 7, dadurch gekennzeichnet, daß der Lenker (16) ein Spannschloß ist.

9. Pflug nach einem der Ansprüche 1 bis 8, dadurch gekennzeichnet, daß die Stelleinrichtung (15) für das Verschwenken des Pflugrahmens (9) ein sperrbarer Hydraulikzylinder ist.

10. Pflug nach einem der Ansprüche 1 bis 9, dadurch gekennzeichnet, daß am Pflugrahmen (9) eine Konsole (30) für ein Stützrad angelenkt ist, die in 31 gelenkig mit der Stange (24) verbunden ist.

11. Pflug nach Anspruch 10, dadurch gekennzeichnet, daß der Abstand des Anlenkpunktes (35) der Konsole (30) an der Stange (24, 37) zum Schwenkpunkt (34) kleiner ist als der Abstand des Anlenkpunktes (36) der Stange (24) an der Konsole (18) zu deren Schwenkpunkt (19).

12. Pflug nach Anspruch 11, dadurch gekennzeichnet, daß der Schwenkpunkt (34) oder der Anlenkpunkt (35) der Konsole (30) als Langloch ausgebildet ist.

13. Pflug nach einem der Ansprüche 1 bis 12, dadurch gekennzeichnet, daß schwenkbar am Pflugrahmen (9) Vorwerkzeuge tragende Konsolen (30) angebracht sind, die über je einen Lenker (37) mit der Konsole des benachbarten Pflugkörpers (21) verbunden sind.

14. Pflug nach Anspruch 13, dadurch gekennzeichnet, daß der Lenker (37) an der in Fahrtrichtung hinten liegenden Konsole (18) angelenkt ist.

15. Pflug nach Anspruch 12 oder 14, dadurch gekennzeichnet, daß der Anschluß des Lenkers (37) an den Konsolen (18, 30) so gewählt ist, daß die die Vorwerkzeuge (38) tragende Konsole eine Schwenkbewegung ausführt, die der des zugehörigen Pflugkörpers angepaßt ist.

16. Pflag nach einem der Ansprüche 13 bis 15, dadurch gekennzeichnet, daß der Hebelarm des Lenkers (37) an der die Pflugkörper (21) tragenden Konsole (18) zum Gelenkpunkt (19) größer ist als der Hebelarm, an der die Vorwerkzeuge (38) tragenden Konsole (30) zum Gelenkpunkt (34).

17. Pflug nach Anspruch 15, dadurch gekennzeichnet, daß die Vorwerkzeuge (38) an einem schwenkbar an der Konsole (30) gelagerten Arm (39) befestigt sind.

18. Pflug nach einem der Ansprüche 1 bis 7, dadurch gekennzeichnet, daß die Konsolen (18) für die Pflugkörper je einen in Pflugrichtung weisenden Arm (20) haben, der zur Befestigung von Vorwerkzeugen dient.

19. Pflug nach einem der Ansprüche 1 bis 7 oder 16 bis 18, dadurch gekennzeichnet, daß der Schwenkpunkt (19) der Konsolen (18) seitlich neben den Pflugkörpern (21) liegt.

20. Pflug nach einem der Ansprüche 1 bis 19, dadurch gekennzeichnet, daß der Pflugrahmen (9) um das Gelenk (10) zwischen zwei verstellbaren Anschlägen (40, 41) verschwenkbar ist.

21. Pflug nach Anspruch 20, dadurch gekennzeichnet, daß ein Anschlag durch eine auf der Kolbenstange (41) des Hydraulikzylinders (15) aufgeschraubte Mutter (40) gebildet ist.

22. Pflug nach Anspruch 21, dadurch gekennzeichnet, daß der zweite Anschlag durch ein Spannschloß (41) und eine Kette (42) gebildet ist.

23. Pflug nach Anspruch 18, dadurch gekennzeichnet, daß die verstellbaren Anschläge durch eine längenveränderliche Kolbenstange (43) des Hydraulikzylinders (15) gebildet sind.

**Revendications**

1. Charrue comportant un châssis avant (1) et un bâti (9) articulé à ce châssis et portant les socs, le premier soc étant écarté de l'articulation (10) du bâti (9) sur le châssis, les socs étant portés par le bâti (9) et pourvus chacun d'une console (18), les consoles étant reliées entre elles par une barre (24) servant à les orienter en parallèle, cette barre d'orientation, les consoles, le bâti et le châssis avant formant un assemblage tel que, lors d'un pivotement du bâti il se produit simultanément une rotation de l'ensemble des socs (21) par rapport au bâti, caractérisée en ce que la console (18) du premier soc (21) ou la barre (24) servant à l'orientation parallèle des socs (21) sont reliés au châssis avant (1) par un organe de liaison (16), et en ce que l'organe de liaison (16) constitue une partie intégrante dudit assemblage et forme avec la console (18) du premier soc (21), le bâti (9) et le châssis avant un quadrilatère irrégulier, si bien que lors du pivotement du bâti (9) il se produit simultanément une rotation de l'ensemble des socs (21) par rapport au châssis avant (1).

2. Dispositif selon la revendication 1, caractérisé en ce que l'articulation (10) se trouve en avant du point de pivotement (19) du premier soc (21).

3. Charrue selon l'une des revendications 1 ou 2, caractérisée en ce que la distance entre l'articulation du bâti (10) et le point de pivotement (19) du premier soc est plus petite que l'écartement entre les points de pivotement (19) des socs successifs.

4. Charrue selon l'une des revendications 1 à 3, caractérisée en ce que la distance entre l'articulation (10) du bâti et le point de pivotement (19) du premier soc est à peu près la moitié de la distance des socs (21) entre eux.

5. Charrue selon l'une des revendications 1 à 4, caractérisée en ce que l'organe de liaison (16) est réglable en longueur.

6. Charrue selon l'une des revendications 1 à 5, caractérisée en ce que plusieurs points d'articulation (25, 26) sont prévus pour l'organe de liaison (16), sur la console (18) et sur le châssis avant (1, 13).

7. Charrue selon l'une des revendications 1 à 6, caractérisée en ce que les droites reliant les points de pivotement ou d'articulation (10, 19 et 25, 26) se coupent en arrière des points de pivotement ou d'articulation respectifs (19, 25) du soc (21) et de l'organe de liaison (16).

8. Charrue selon l'une des revendications 1 à 7, caractérisée en ce que l'organe de liaison (16) est un tendeur.

9. Charrue selon l'une des revendications 1 à 8, caractérisée en ce que le moyen de commande (15) du pivotement du bâti (9) est un vérin hydraulique blocable.

10. Charrue selon l'une des revendications 1 à 9, caractérisée en ce que une console (30) portant une roue de soutien est articulée au bâti (9) et reliée à la barre (24) par une articulation (31).

11. Charrue selon la revendication 10, caractérisée en ce que la distance entre le point d'articulation de ladite console (30) à la barre (24, 37) et le point de pivotement de cette console est plus petite que la distance entre le point d'articulation des consoles (18) portant les socs et leur point de pivotement (19).

12. Charrue selon la revendication 11, caractérisée en ce que le point de pivotement (34) ou le point d'articulation (35) comporte une lumière allongée.

13. Charrue selon l'une des revendications 1 à 12, caractérisée en ce que plusieurs consoles (30) portant des outils avancés sont montées pivotantes sur le bâti (9) et son reliées chacune à la console du soc voisin (21) par un organe de liaison (37).

14. Charrue selon la revendication 13, caractérisée en ce que l'organe de liaison (37) est articulé à la console (18) située derrière lui dans le sens de la marche.

15. Charrue selon l'une des revendications 13 ou 14, caractérisée en ce que la liaison de l'organe de liaison (37) à la console (18, 30) est choisie de telle sorte que la console portant l'outil avancé (38) reçoit un mouvement de pivotement qui est adapté à celui du soc correspondant.

16. Charrue selon l'une des revendications 13 à 15, caractérisée en ce que le bras de levier de l'organe de liaison (37) qui va de la console (18) qui porte le soc (21) au point d'articulation (19) est plus grand que le bras de ·levier qui va de la console (30) qui porte l'outil avancé à son point d'articulation.

17. Charrue selon la revendication 15, caractérisée en ce que l'outil avancé (38) est fixé à un bras (39) monté à pivot sur la console (30).

18. Charrue selon l'une des revendications 1 à 7, caractérisée en ce que les consoles (18) sont pourvues chacune d'un bras (20) porte-soc avançant dans la direction du labourage.

19. Charrue selon l'une des revendications 1 à 7, caractérisée en ce que le point de pivotement (19) des consoles (18) est décalé latéralement par rapport aux socs (21).

20. Charrue selon l'une des revendications 1 à 19, caractérisée en ce que le bâti (9) et l'articulation (10) peuvent pivoter entre deux butées réglables (40, 41).

21. Charrue selon la revendication 20, caractérisée en ce que l'une des butées est constituée par un écrou (40) qui se visse sur la tige du vérin hydraulique (15).

22. Charrue selon la revendication 21, caractérisée en ce que la deuxième butée est constituée par un tendeur (41) et une châine (42).

23. Charrue selon la revendication 20, caractérisée en ce que les butées réglables sont formées par la tige (43) de longueur réglable du vérin (15).

**Claims**

1. A plough with a front plough frame (1) and a plough frame (9) connected pivotably thereto and supporting the plough bodies, the first plough body being arranged at a distance relative to the pivot point, the plough bodies are secured on the plough frame (9) and are provided in each case with a cantilever (18), the cantilevers (18) being interconnected via a rod (24) actuating a parallel guide, and the parallel guide, cantilevers, front plough frame and plough frame forming a gearing so that when the plough frame (9) is pivoted, a rotation of all the plough bodies (21) relative to the plough frame occurs simultaneously, characterised in that the cantilever of the first plough body (21) or the rod (24) actuating the parallel guide of the plough body (21) is connected via a guide rod (16), that the guide rod (16) forms an element of the gearing and with the cantilever (18) of the first plough body (21), the plough frame (9) and the front plough frame forms an irregular four-bar linkage, so that when the plough frame (9) pivots, a rotation of all the plough bodies (21) relative to the front plough frame (1) occurs simultaneously.

2. A plough according to claim 1, characterised in that the frame pivoting point (10) is in front of the pivot point (19) of the first plough body (21).

3. A plough according to claim 1 or 2, characterised in that the distance between the frame pivot point (10) and the pivot point (19) of the first plough body (21) is less than the distance between two pivot points (19) of successive plough bodies.

4. A plough according to any one of claims 1 to 3, characterised in that the distance between the frame pivot point (10) and the pivot point (19) of the first plough body is approximately half as large as the distance between the plough bodies (21).

5. A plough according to any one of claims 1 to 4, characterised in that the guide rod (16) is length-adjustable.

6. A plough according to any one of claims 1 to 5, characterised in that a plurality of linking points (19, 25) are provided on the cantilever (18) and on the front plough frame (1, 13) for the guide rod (16).

7. A plough according to any one of claims 1 to 6, characterised in that the connection lines of the linking points (10, 19 and 25, 26) intersect behind the linking points (19, 25) of the first plough body (21) and of the guide rod (16).

8. A plough according to any one of claims 1 to 7, characterised in that the guide rod (16) is a tension jack.

9. A plough according to any one of claims 1 to 8, characterised in that the adjustment device (15) for the pivoting of the plough frame (9) is a lockable hydraulic cylinder.

10. A plough according to any one of claims 1 to 9, characterised in that a cantilever (30) for a drawback jack caster wheel is coupled to the plough frame (9) and is connected pivotably in 31 to the rod (24).

11. A plough according to claim 10, characterised in that the distance of the linking point (35) of the cantilever (30) on the rod (24, 37) to the pivot point (34) is less than the distance of the linking point (36) of the rod (24) on the cantilever (18) to the pivot point thereof (19).

12. A plough according to claim 11, characterised in that the pivot point (34) or the linking point (35) of the cantilever (30) is designed as an elongate hole.

13. A plough according to any one of claims 1 to 12, characterised in that cantilevers (30) supporting the front tools are disposed pivotably on the plough frame (9) and are connected in each case to the cantilever of the adjacent plough body (21) by means of a guide rod (37).

14. A plough according to claim 13, characterised in that the guide rod (37) is coupled to the cantilever (18) disposed behind in the direction of travel.

15. A plough according to claim 12 or 14, characterised in that the connection of the guide rod (37) to the cantilevers (18, 30) is selected so that cantilever supporting the front tools (38) performs a pivot movement, which is adapted to that of the associated plough body.

16. A plough according to any one of claims 13 to 15, characterised in that the lever arm of the guide rod (37) on the cantilever (18) supporting the plough bodies (21) in respect of the pivot point (19) is larger than the lever arm on the cantilever (30) supporting the front tools (38) in respect of the pivot point (34).

17. A plough according to claim 15, characterised in that the front tools (38) are secured on an arm (39) which is disposed pivotably on the cantilever (30).

18. A plough according to any one of claims 1 to 7, characterised in that the cantilevers (18) for the plough bodies each have an arm (20) pointing in the direction of the plough, which is used to secure front tools.

19. A plough according to any one of claims 1 to 7 or 16 to 18, characterised in that the pivot point (19) of the cantilevers (18) is laterally adjacent the plough bodies (21).

20. A plough according to any one of claims 1 to 19, characterised in that the plough frame (9) is pivotable about the joint (10) between two adjustable stops (40, 41).

21. A plough according to claim 20, characterised in that a stop is formed by a nut (40) screwed onto the piston rod (41) of the hydraulic cylinder (15).

22. A plough according to claim 21, characterised in that the second stop is formed by a tension jack (41) and a chain (42).

23. A plough according to claim 18, characterised in that the adjustable stops are formed by a length-adjustable piston rod (43) of the hydraulic cylinder (15).

Fig.1

Fig. 2

0 062 734

Fig. 3

Fig. 4

3